# EUROPEAN PATENT SPECIFICATION

(11) **EP 0 759 548 B1**
(45) Date of publication and mention of the grant of the patent: **16.04.2003**
(21) Application number: 96111434.5
(22) Date of filing: 16.07.1996
(51) Int. Cl.: G01M 17/007

(54) **Control method and system suitable to drive simulation roller test beds**
Steuermethode und -system zur Fahrsimulation auf Rollentestanlagen
Système et méthode de contrôle convenable pour bancs d'essai à rouleaux de simulation de conduite

(30) Priority: 10.08.1995 IT TO950680
(43) Date of publication of application: 26.02.1997
(73) Proprietor: FIAT AUTO S.p.A., 10135 Torino (IT)
(72) Inventor: Garrone, Felice, 10100 Torino (IT); Filippi, Enrico, 10100 Torino (IT)
(74) Representative: Di Francesco, Gianni

(56) References cited:
- US-A- 3 926 043
- US-A- 4 186 593
- US-A- 4 825 690
- US-A- 5 231 870

## Description

The present invention refers to a control method and system suitable to drive simulation roller test beds. Currently, the simulation roller test beds are used to test and control autovehicles inside laboratories and manufacturing plants, since they are able to simulate, in a tight space, the main road working conditions of the above mentioned transport means. Said test beds are generally provided with all the devices and instruments needed to measure the engine output horsepower, the wheel horsepower available for traction, the dissipated power, the tyre rolling resistance (force), the drag, the transmission internal friction, the engine efficiency, the transmission ratios, the transmitted torque and the brake torque, the specific fuel consumption, the temperatures and concentrations of the lubricating oil (lube), of the exhaust gases and of the cooling water.

Usually, the power delivered by the engine is absorbed by a dynamometer brake provided with a measure device, meanwhile speed is measured by tachometers. The fuel consumption is measured by a volume or weight meter; the temperatures of the lubricant oil, of the exhaust gases, of the cooling water entering and leaving the engine are taken by thermometers. All these instruments are often recording devices and are gathered on one control board, as described, for example, in US-A-4,825,690.

In order to simulate the road working conditions of the autovehicle, the dynamometer brake is rigidly connected to at least one of the two rollers on which the autovehicle driving wheels rest: the brake horsepower is the one transmitted to the wheels by the engine and then, through the tyres, is transmitted to the rollers.

From this point of view the roller test bed is extremely useful, since it allows the measure of the various autovehicle relevant parameters inside the laboratory or in the manufacturing plant, by simulating the transport means road behaviour and by avoiding, in such manner, a slow and difficult data recording.

In particular, it is possible to measure directly the engine power when the engine is already installed in the corresponding autovehicle, without having to set up a specific test rig for such operation.

However, due to the different bending radius of the rollers in comparison to the one of the road, and due to the wedging in and to the slipping of the wheels between the rollers, the simulation is affected by errors which significantly influence the power dissipated by the roller-tyre coupling. Further, for certain parameters (as, for instance, the friction between tyre and road) it is pratically impossible to reproduce, in the laboratory or in the plant the technical/environmental working conditions encountered in road tests.

Alternative construction solutions, special measuring methods and other particular expedients (as those described in the european patent applications EP 0 383 068, EP 0 417 020, EP 0 507 631, EP 0 577 855 and in US-A-3,926,043) allow the reduction of such errors. Further, the adopted solutions do not eliminate completely the error made by measuring the parameters during the simulation in comparison to the measures registered during road tests and, furthermore, they use a number of electronic control equipments (power actuators, computers, simulating and calculating instruments) that would be desirable to reduce, in order to control the operating costs and in order to simplify the measuring procedures.

Furthermore, in the case of transient state tests (exhaust emission measures of the autovehicle) the traditional roller beds have a series of different inertia flywheels, linkable individually or in batches to the roller bed, that have to simulate the autovehicle translating mass and the equivalent translating mass of the road wheels. In these cases, however, the power measured by the dynamometer brake does not correspond any more to the total power delivered by the engine to the wheels,but only to the power required, at those same speeds, for the autovehicle motion in steady conditions.

From the foregoing considerations it is evident that the relevant parameter values, resulting from the measures obtained on the simulation roller beds of traditional type, appear, sometimes, very far from reality and, therefore, there is the risk to make significant errors especially in the recording of the dissipated powers and in the consumption and exhaust emission analysis, unless the quality of simulation is also verified through direct road test measure and recording of the relevant parameters.

It is evident, anyway, that, in this last case, said parameters are not part of the control and of the driving system of the roller bed and, therefore, they are utilized in a practic way in order to correct the errors at the limit conditions; furthermore, the inconveniences that have to be eliminated (slowness of the method, poor practicality) reappear again in all their evidence.

The present invention goal is to indicate a simulation roller bed driving method that overcomes the disadvantages previously mentioned and namely that, by appropriately managing the data obtained during simulation conditions (and, therefore, inaccurate, due to the sliding between rollers and tyres), allows the total elimination of errors related particularly to the engine power measures and to the analysis of the autovehicle exaust emissions, in comparison with the reference data registered during the road tests.

Another goal of the present invention is to indicate a method suitable to drive simulation roller beds able to handle the roller-tyre interface of the autovehicle at any operating condition of work and to measure any relevant parameter ( as, for instance, the transmitted torques, the engine revolutions number, the braking torques), including the interference loading incidence between tyre and roller due to cambers and to convergence, that can be present in the not steering wheels , due to the type of suspension utilized for the autovehicle (for example in the case of independent wheel suspensions).

A further goal of the present invention is to realize a control apparatus suitable to drive the simulation roller beds and able to implement the previously mentioned method.

Last but not least goal of the invention is to realize a control apparatus suitable to drive the simulation roller beds that can be realized easily and economically, without the use of complex or expensive technologies.

Such goals are reached through a method suitable to drive simulation roller beds according to claim 12, to be implemented, preferably, through the control apparatus according to claim 1.

The method object of the present invention provides, in an advantageous way, the use of the autovehicle parameters, which are recorded during the road test, as integral part of an automatic feedback control system, in order to measure the effects reproduced by the simulation roller bed, so that there is no variance between the registered road test data and the corresponding output data taken from the roller bed and put through the feedback system.

Furthermore, the control apparatus that, preferably, implements the method object of the present invention can also be utilized to handle the interface functions between the tested element (tyre, transmission system, feeding system, engine) and the roller bed, so that the autovehicle has an active function during the simulation, under all conditions (interference loads, camber, convergence) both to record the relevant parameters, and to control the correct reproduction of the test cycle.

Other goals and advantages of the present invention will be clear through the following description and through the attached drawings, given as an explanatory only and not limiting example, where:
Figure 1 represents a control apparatus suitable to drive simulation roller beds that includes an automatic feedback control system according to the method described in the present invention;
Figure 2 represents a flow diagram of the automatic feedback control system of Figure 1.

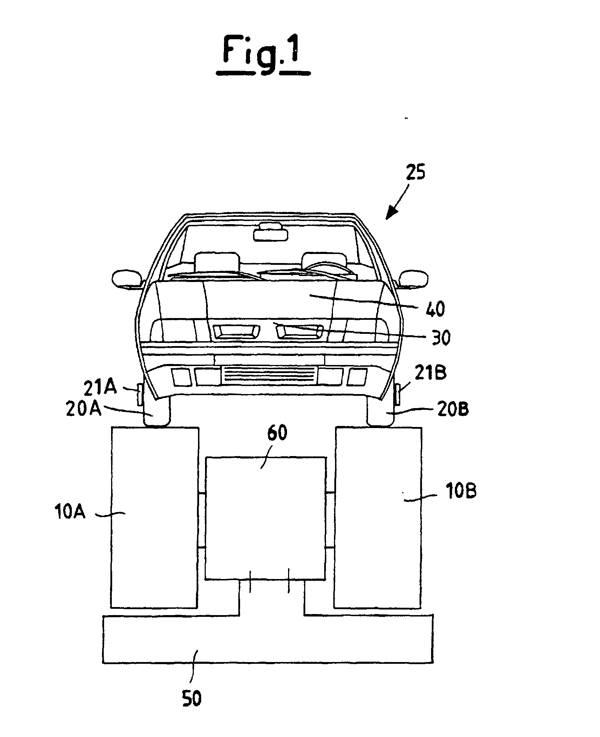

With reference to Figure 1, the control apparatus suitable to drive simulation roller beds includes two rollers (10A, 10B), equipped with torque and speed measuring devices, which support, respectively, the tyres (20A, 20B) of an autovehicle (25) wheels. Said tyres (20A, 20B) are provided with torque and speed measuring devices (shown as 21A, 21B). Numeral 30 indicates an area of the autovehicle (25) in correspondence of which the engine and the fuel supply throttle valve are placed: suitable devices measure the opening angle of the throttle valve and the engine revolutions per minute in order to record the requested parameters and analysis related to the gaseous emissions, the fuel consumptions, the engine fatigue. Numeral 40 indicates an area of the autovehicle (25) in correspondence of which the clutch, the brakes and the gearshift are placed: maesuring devices record the transmitted torques and the dissipated powers by said components in several conditions of temperature. Numeral 50 indicates a support that has the double function of support base for the rollers (10A, 10B) and of support base for the automatic feedback control system (60).

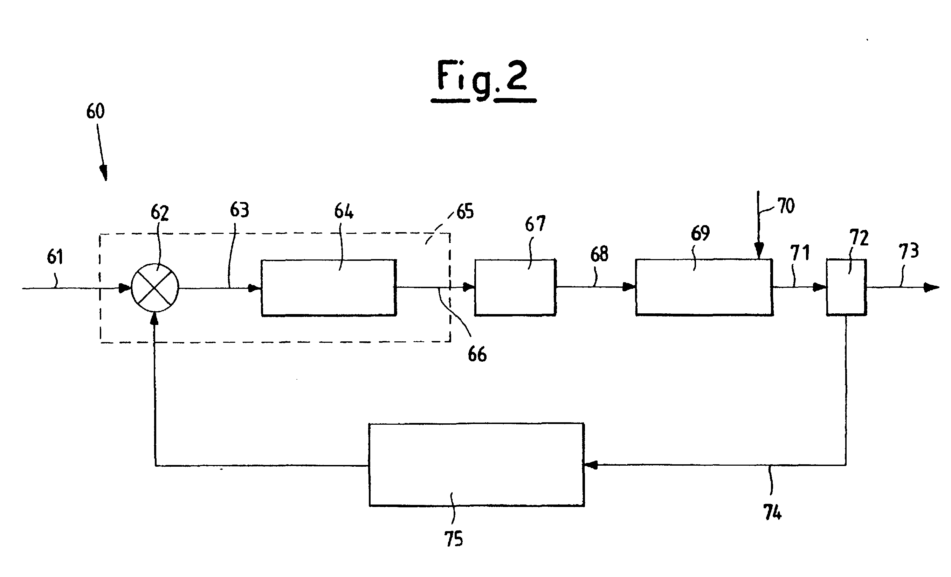

Referring to Figure 2, the automatic feedback control system (60) includes an error detection block (62) [which together with the control block (64), forms the real control device (65) of system (60)], connected in sequence with a measuring block (67) and, then, with a driving block (69) of the roller bed [comprising an electric motor controlled, through current changes, by the signal (68), which comes from the measuring block (67), after appropriate algorithm processing done by a control device (65)]. A sampling selector (72) takes the output signal (71) [in a closed ring (74) configuration] from the driving block (69) and sends it back, in feedback action, through the connecting block (75), to the control system (60) entry, where it is algebraically added to the signal (61) representing the time evolution of the relevant parameters of the autovehicle (25) registered during the road tests. The signal (63) is the error signal, i.e. the signal that represents the existing difference between the signals corresponding to the data measured on the roller bed and the same data registered during the road tests. Numeral 70 indicates a disturbance signal that can influence the operations of the driving block (69), while numeral 73 indicates the output signal in an open ring (74) configuration.

The functioning of the automatic feedback control system (60), suitable to drive the simulation roller beds according to the method provided by the present invention, is the following: after the preliminary operations of roller bed autosetting and of calculation of the instant tangential force exercised by each roller (10A, 10B) on the corresponding tyre (21A, 21B), the commands to drive the roller bed are given by the control device (65) to the power circuits on the basis of the comparison between the electric signal (68), coming from the measuring block (67), and the input signal (61), corresponding to the time evolution of the autovehicle (25) parameters registered during road tests. The electric signal (68) is sent to the driving block (69), and, then, is sampled by the sampling selector (72) before being sent by feedback to the error detector block (62), through the connecting block (75), along ring (74). Particularly, the control device (65), formed by the error detector block (62) and by the controlling block (64) (both known in the art), the driving block (69) and the connecting device (75) are designed (through known methods of stabilization of the output signals in a feedback system), so as to reduce to zero the error signal (63), taking also into account the characteristics of the electric output signal (71,73) in the open ring (73) and closed ring (74) configurations and of the disturbances (70) present within the driving block (69).

According to the described control diagram scheme, the controlling block (64) uses known simulation and correction algorithms, developed according to the value variations of the error signal (63) and, therefore, and utilized to control (through variations of current) an electric motor present within the driving block (69). In this way the roller bed is controlled directly by the autovehicle (25), which becomes an active element in the simulation control system of the relevant parameters.

These signals, in fact, are measured, feedback(ed) and compared with the ones taken during the road tests, so that, after few stabilization cycles, they are capable of driving the drive system of the roller bed.

The control apparatus suitable to drive the roller beds according to the present invention provides the measure [through the measuring block (67)] the elaboration and the stabilization of several relevant parameters of the autovehicle (25); in fact, the opening angle of the throttle valve and the engine revolutions are measured, so as to execute gaseous emission analysis, surveys, as function of time, on fuel consumption and on engine fatigue, under several mechanical and environmental stress conditions.

Furthermore, through an autopilot and/or driver device, the efficiency of the mechanical parts of the autovehicle (25), as the cluch, the brakes and the gearshift, is rated, so as to define the torque transmitted by the autovehicle (25) engine to the camshaft, the autovehicle (25) speed, the friction between the tyres (20A, 20B) and the rollers (10A, 10B) the wearing of the tyres (20A, 20B), the roller interference loads due to the cambers and to the convergence (as a consequence of the utilized suspension type) and the total dissipated power value under different temperature conditions). Suitable measure devices associated to the rollers (10A, 10B) measure the rollers (10A, 10B) speed and the transmitted torque .

Finally, the roller bed utilizing the previously described control system is in accordance with EPA homologation rules and is suitable for the execution of the following cycles : CEE (city, consumption and Diesel preconditioning cycles), USA 75, USA 74, HIGHWAY USA, phase 1 of USA cycle, JAPAN 10 modes, JAPAN 11 modes, JAPAN 10 and 15 modes.

From the foregoing description, the method and the control system characteristics, object of the present invention, to drive simulation roller beds are clear, as well as the advantages.

Particularly, the advantages are represented by:
- simulation and control of the autovehicle/roller interface under any mechanical or environmental condition;
- optimum check of the correct reproduction of the test cycle, utilizing the relevant parameters of the autovehicle as part of the measuring system of the effects produced by the roller bed;
- check of the simulation accuracy;
- errors or variances elimination between the values of the relevant parameters measured on the roller bed and those registered during road tests.
- possibility to certify the roller bed utilizing the driving method object of the invention according to the EPA, CEE (referred to gaseous emissions, consumptions, dissipated power, Diesel cycles), USA, Japan regulations.

It is evident, finally, that several variations can be done to the method and to the control apparatus suitable to drive the simulation roller beds, object of the present invention, without departing from the innovative principles inherent in the invention, as it is evident that, in the practical realization of the invention, the materials, the forms and the sizes of the illustrated details could be different depending on the specific needs and these same details could be replaced with others technically equivalent.

For example, the automatic control system can be of the adaptive type, so as to modify its action in order to reach the best operational way, or of the optimal type, when the disturbances acting on the process have the characteristics of accidental variables, in other words they are not completely time defined functions.

Furthermore, the automatic control can be realized through computer systems, which have the task to guarantee,in a continuous way, that the control system equipment really works in the way it has been designed for.

Finally, the control apparatus suitable to drive simulation roller beds can include an autovehicle centering system on the rollers and/or a mechanical lifting system of the autovehicle (the last one is utilized for cold tests).

## Claims

1. A control apparatus for driving simulation roller beds, which are used for autovehicle tests in industrial plants, said apparatus including:
- a plurality of rollers (10A, 10B), placed on a support (50), each of said rollers (10A, 10B) being in contact with at least one of the tyres (20A, 20B) of an autovehicle (25) being tested in place;
- means for centring said autovehicle (25) on said rollers (10A, 10B);
- first measuring devices, provided on said rollers (10A, 10B), for measuring the rollers torque and speed; and
- second measuring devices, provided on said tyres (20A, 20B), for measuring the tyres torque and speed, said first and second measuring devices being adapted for providing first data corresponding to the torque and the speed transmitted to the autovehicle wheels and third measuring devices (67) being adapted for providing second data corresponding to the position of the autovehicle throttle valve, the engine revolutions of said autovehicle (25), the power transmitted by said engine to said wheels and the dissipated power,
said first and second data being used for providing first signals (68), wherein
an automatic adaptive feedback control system (60) is provided for sending back said first signals (68) and comparing them with respective second signals (61) representative of third data relating to the position of the autovehicle throttle valve, the engine revolutions of said autovehicle (25), the torque transmitted by said engine to the autovehicle wheels, the power transmitted by said engine to said wheels and the dissipated power, said third data being measured during on-road tests, said adaptive feedback control system (60) being adapted for stabilising and zerosetting the respective algebraic sums between said first (68) and second signals (61), after a plurality of passages of said first signals (68) inside a reaction ring (74) of said control system (60), said algebraic sums between said first (68) and second signals (61) representing error signals (63) which constitute the existing differences between said first and second signals (68, 61) corresponding, respectively, to said first and second data on said roller beds (10A, 10B) and said third data registered during said on-road tests, said adaptive feedback control system (60) including roller beds driving means (69), which determine changes in the speed and in the torque of said roller beds (10A, 10B) on the basis of said error signals (63) to compensate for errors in the changes of speed and torque of said roller beds (10A, 10B).

2. A control apparatus according to claim 1, **characterised in that** said roller beds driving means (69) are connected to a sampling selector device (72), which takes samples of a signal (71) depending on additional disturbance signals (70) of said roller beds driving means (69), said selector device (72) sending said signal (71), through said reaction ring (74) including a connecting device (75) adapted for reconstructing said signal (71) starting from said samples, to a control device (65), which sends further correcting signals (66) to the input of said third measuring means (67).

3. A method suitable to drive simulation roller beds, of the type utilised in a control apparatus according to claim 1, **characterised in that** said method comprises the following steps:
- autosetting of the control apparatus;
- calculation of the instant tangential force exercised by each roller (10A, 10B) on the corresponding contact tyre (20A, 20B);
- measure of the time variation of at least one physical parameter of the autovehicle (25) or of parts thereof to be executed during a first on-road test of said autovehicle (25), said physical parameters being constituted by the position of the autovehicle throttle valve, the engine revolutions of said autovehicle (25), the torque and the speed transmitted by said engine to the autovehicle wheels, the power transmitted by said engine to said wheels and the dissipated power.
- recording of second signals (61) corresponding to the variation of said parameters recorded during said first on-road test;
- measure of the time variation of said physical parameters of the autovehicle (25) or of parts thereof during a second test of the autovehicle (25), which is performed on the simulation roller beds;
- recording of first signals (68) corresponding to said variation referred to said second test on the roller beds, wherein said first signals (68) are sent to the input of roller beds driving means (69);
- comparison between said second signals (61) and said first signals (68) at the input of an automatic adaptive feedback control system (60), said first signals (68) being taken at the output of said system (60) and being brought back to the input of said control system (60) through at least one closed reaction ring (74);
- production of error signals (63), defined as the algebraic sum between said first signals (68) and said second signals (61), said algebraic sum representing the existing difference between the signals (68, 61) corresponding to said parameters measured during said second test of the autovehicle (25) on the roller beds and the same parameters registered during said first on-road test, said adaptive feedback control system (60) further including said roller beds driving means (69), which determine changes in the speed and in the torque of said roller beds (10A, 10B) on the basis of said error signals (63) to compensate for errors in the changes of speed and torque of said roller beds (10A, 10B).
- correction of said parameters measured during said second test of the autovehicle (25) on the roller beds, so as to zeroset said error signals (63).

4. A method according to claim 3, **characterised in that** said error signals (63) comprise a disturbance signal (70), which is present at the input of said roller beds driving means (69), said disturbance signal (70) being sampled in a sampling selector device (72) and being brought back to the input of said control system (60), through said reaction ring (74), by means of a connecting device (75) adapted for reconstructing the sampled disturbance signal.

## Patentansprüche

1. Steuervorrichtung für Fahrsimulation auf Rollentestanlagen, die für Fahrzeugtests in Industrieanlagen verwendet werden, wobei die Vorrichtung umfasst:
- eine Anzahl von Rollen (10A, 10B), die auf einem Auflager (50) angeordnet sind, wobei jede der Rollen (10A, 10B) mit mindestens einem der Reifen (20A, 20B) eines Fahrzeugs (25), das getestet wird, in Berührung ist;
- Mittel zur Zentrierung des Fahrzeugs (25) auf den Rollen (10A, 10B);
- erste Messgeräte an den Rollen (10A, 10B), zum Messen des Rollendrehmoments und der Rollengeschwindigkeit; und
- zweite Messgeräte an den Reifen (20A, 20B), zum Messen des Reifendrehmoments und der Reifengeschwindigkeit,
wobei die ersten und zweiten Messgeräte dafür angepasst sind, erste Daten über das auf die Fahrzeugräder übertragene Drehmoment und die auf die Fahrzeugräder übertragene Geschwindigkeit zu liefern; und dritte Messgeräte (67), die dafür angepasst sind, zweite Daten über die Stellung des Fahrzeugdrosselventils, die Motordrehzahl des Fahrzeugs (25), die vom Motor auf die Räder übertragene Leistung und die Verlustleistung zu liefern,
wobei die ersten und zweiten Daten dazu verwendet werden, erste Signale (68) zu erzeugen, wobei
ein automatisches selbstanpassendes Regelungssystem mit Rückkopplung (60) dafür vorgesehen ist, die ersten Signale (68) zurückzusenden und sie mit den jeweiligen zweiten Signalen (61) zu vergleichen, die auf dritten Daten beruhen, welche die Stellung des Fahrzeugdrosselventils, die Motordrehzahl des Fahrzeugs (25), das vom Motor auf die Fahrzeugräder übertragene Drehmoment, die vom Motor auf die Räder übertragene Leistung und die Verlustleistung angeben, wobei die dritten Daten bei Straßentests gemessen werden, wobei das selbstanpassende Regelungssystem mit Rückkopplung (60) dafür angepasst ist, die jeweiligen algebraischen Summen zwischen den ersten (68) und den zweiten Signalen (61) zu stabilisieren und auf Null zu stellen, nach mehreren Durchgängen der ersten Signale (68) in einem Reaktionsring (74) des Steuersystems (60), wobei die algebraischen Summen zwischen den ersten (68) und den zweiten Signalen (61) Fehlersignale (63) darstellen, welche die bestehenden Unterschiede zwischen den ersten und zweiten Signalen (68, 61) wiedergeben, die den ersten und zweiten Daten an den Rollenanlagen (10A, 10B) entsprechen, und den dritten Daten, die bei den Straßentests aufgezeichnet werden, wobei das selbstanpassende Regelungssystem mit Rückkopplung (60) Rollenanlagenantriebsmittel (69) umfasst, die Änderungen in Geschwindigkeit und Drehmoment der Rollenanlagen (10A, 10B) auf Grundlage der Fehlersignale (63) bestimmen, um Fehler in den Geschwindigkeits- und Drehmomentänderungen der Rollenanlagen (10A, 10B) auszugleichen.

2. Steuervorrichtung nach Anspruch 1, **dadurch gekennzeichnet, dass** die Rollenanlagenantriebsmittel (69) mit einem Abtastwahlschalter (72) verbunden sind, der Proben eines Signals (71) nimmt, das von zusätzlichen Störsignalen (70) der Rollenanlagenantriebsmittel (69) abhängt, wobei dieser Abtastwahlschalter (72) die Signale (71) durch den Reaktionsring (74), der ein Verbindungsgerät (75) umfasst, das dafür angepasst ist, das Signal (71) auf Grundlage der Proben wiederaufzubauen, an ein Steuergerät (65) sendet, das Korrektursignale (66) zum Eingang der dritten Messmittel (67) weitersendet.

3. Steuerverfahren für Fahrsimulationsrollenanlagen, von der Art wie sie in einer Steuervorrichtung nach Anspruch 1 verwendet wird, **dadurch gekennzeichnet, dass** die Methode folgende Schritte umfasst:
- automatisches Einstellen der Steuervorrichtung;
- Berechnen der Tangentialkraft, die in einem bestimmten Moment von jeder Rolle (10A, 10B) auf den jeweiligen Reifen (20A, 20B) ausgeübt wird;
- Messen der Zeitabweichung von zumindest einem physikalischen Kennwert des Fahrzeugs (25) oder von Teilen davon, die bei einem ersten Straßentest des Fahrzeugs (25) auszuführen ist, wobei die physikalischen Kennwerte die Stellung des Fahrzeugdrosselventils, die Motordrehzahl des Fahrzeugs (25), das vom Motor auf die Fahrzeugräder übertragene Drehmoment und die vom Motor auf die Fahrzeugräder übertragene Geschwindigkeit, die vom Motor auf die Räder übertragene Leistung und die Verlustleistung sind;
- Aufzeichnen der zweiten Signale (61), die der Abweichung der Kennwerte entsprechen, die beim ersten Straßentest aufgezeichnet worden sind;
- Messen der Zeitabweichung der physikalischen Kennwerte des Fahrzeugs (25) oder von Teilen davon während einem zweiten Test des Fahrzeugs (25), der auf den Simulationsrollenanlagen durchgeführt wird;
- Aufzeichnen von ersten Signalen (68), die der Abweichung in Bezug auf den zweiten Test auf den Rollenanlagen entsprechen, wobei die ersten Signale (68) zum Eingang des Rollenanlagenantriebsmittels (69) gesendet werden;
- Vergleichen der zweiten Signale (61) mit den ersten Signalen (68) am Eingang eines automatischen selbstanpassenden Regelungssystems mit Rückkopplung (60), wobei die ersten Signale (68) vom Ausgang der Vorrichtung (60) genommen werden und durch zumindest einen geschlossenen Reaktionsring (74) zum Eingang der Steuervorrichtung (60) zurückgeführt werden;
- Erzeugen von Fehlersignalen (63), die als algebraische Summe zwischen den ersten Signalen (68) und den zweiten Signalen (61) definiert sind, wobei die algebraische Summe den vorhandenen Unterschied zwischen den Signalen (68, 61) darstellt, die den Kennwerten entsprechen, die während dem zweiten Test des Fahrzeugs (25) auf den Rollenanlagen gemessen werden, sowie denselben Kennwerten, die beim ersten Straßentest aufgezeichnet werden, wobei das selbstanpassende Regelungssystem mit Rückkopplung (60) des Weiteren die Rollenanlagenantriebsmittel (69) umfasst, die Änderungen der Geschwindigkeit und des Drehmoments der Rollenanlagen (10A, 10B) auf Grundlage der Fehlersignale (63) bestimmen, um Fehler in den Änderungen von Geschwindigkeit und Drehmoment der Rollenanlagen (10A, 10B) auszugleichen.
- Korrigieren der Kennwerte, die während dem zweiten Test des Fahrzeugs (25) auf den Rollenanlagen gemessen werden, um so die Fehlersignale (63) auf Null zu stellen.

4. Verfahren nach Anspruch 3, **dadurch gekennzeichnet, dass** die Fehlersignale (63) ein Störsignal (70) umfassen, das am Eingang der Rollenanlagenantriebsmittel (69) vorhanden ist, wobei das Störsignal (70) in einem Abtastwahlschalter (72) erfasst wird, und durch den Reaktionsring (74)zum Eingang des Steuersystems (60) zurückgebracht wird mittels einem Verbindungsgerät (75), das dafür angepasst ist, das erfasste Störsignal wiederaufzubauen.

## Revendications

1. Appareil de commande permettant d'entraîner des transporteurs à rouleaux de simulation, qui sont utilisés pour des essais automobiles dans les usines industrielles, ledit appareil comportant ;
- une pluralité de rouleaux (10A, 10B), placés sur un support (50), chacun desdits rouleaux (10A, 10B) étant en contact avec au moins l'un des pneus (20A, 20B) d'une automobile (25) soumise à des essais sur place ;
- des moyens permettant de centrer ladite automobile (25) sur lesdits rouleaux (10A, 10B) ;
- des premiers dispositifs de mesure, prévus sur lesdits rouleaux (10A, 10B), permettant de mesurer la vitesse et le couple des rouleaux ; et
- des deuxièmes dispositifs de mesure, prévus sur lesdits pneus (20A, 20B), permettant de mesurer la vitesse et le couple des pneus,
lesdits premiers et deuxièmes dispositifs de mesure étant conçus pour fournir des premières données correspondant au couple et à la vitesse transmis aux roues de l'automobile, et des troisièmes dispositifs de mesure (67) étant conçus pour fournir des deuxièmes données correspondant à la position du papillon des gaz de l'automobile, au nombre de tours du moteur de ladite automobile (25), à la puissance transmise par ledit moteur auxdites roues et à la puissance dissipée,
lesdites premières et deuxièmes données étant utilisées pour fournir des premiers signaux (68), dans lequel
un système de commande de rétroaction adaptative automatique (60) est prévu pour renvoyer lesdits premiers signaux (68) et les comparer aux deuxièmes signaux respectifs (61) représentatifs de troisièmes données concernant la position du papillon des gaz de l'automobile, le nombre de tours du moteur de ladite automobile (25), le couple transmis par ledit moteur aux roues de l'automobile, la puissance transmise par ledit moteur auxdites roues et la puissance dissipée, lesdites troisièmes données étant mesurées au cours d'essais sur route, ledit système de commande de rétroaction adaptative (60) étant en outre conçu pour stabiliser et remettre à zéro les sommes algébriques respectives desdits premiers (68) et deuxièmes signaux (61), après une pluralité de passages desdits premiers signaux (68) à l'intérieur d'un anneau de réaction (74) dudit système de commande (60), lesdites sommes algébriques desdits premiers (68) et deuxièmes (61) signaux représentant les signaux d'erreurs (63) qui constituent les différences existantes entre lesdits premiers et deuxièmes signaux (68, 61) correspondant respectivement auxdites premières et deuxièmes données sur lesdits transporteurs à rouleaux (10A, 10B) et auxdites données enregistrées au cours desdits essais sur route, ledit système de commande de rétroaction adaptative (60) comportant aussi des moyens d'entraînement des transporteurs à rouleaux (69) qui déterminent les changements de vitesse et de couple desdits transporteurs à rouleaux (10A, 10B) en fonction desdits signaux d'erreurs (63) afin de compenser les erreurs dans les changements de vitesse et de couple desdits transporteurs à rouleaux (10A, 10B).

2. Appareil de commande selon la revendication 1, **caractérisé en ce que** lesdits moyens d'entraînement des transporteurs à rouleaux (69) sont reliés à un dispositif sélecteur d'échantillonnage (72), qui prélève les échantillons d'un signal (71) dépendant de signaux perturbateurs supplémentaires (70) desdits moyens d'entraînement des transporteurs à rouleaux (69), ledit dispositif sélecteur (72) envoyant ledit signal (71), par le biais dudit anneau de réaction (74) comportant un dispositif de connexion (75) conçu pour reconstituer ledit signal (71) en partant desdits échantillons, à un dispositif de commande (65) qui envoie d'autres signaux de correction (66) à l'entrée desdits troisièmes moyens de mesure (67).

3. Procédé approprié pour entraîner des transporteurs à rouleaux de simulation, du type utilisé dans un appareil de commande selon la revendication 1, **caractérisé en ce que** ledit procédé comprend les étapes consistant à :
- autorégler l'appareil de commande ;
- calculer la force tangentielle instantanée exercée par chaque rouleau (10A, 10B) sur le pneu de contact correspondant (20A, 20B) ;
- mesurer la variation de temps d'au moins un paramètre physique de l'automobile (25) ou de parties de celui-ci à exécuter au cours d'un premier essai sur route de ladite automobile (25), lesdits paramètres physiques étant constitués par la position du papillon des gaz de l'automobile, le nombre de tours du moteur de ladite automobile (25), le couple et la vitesse transmis par ledit moteur aux roues de l'automobile, la puissance transmise par ledit moteur auxdites roues et la puissance dissipée ;
- enregistrer des deuxièmes signaux (61) correspondant à la variation desdits paramètres enregistrés au cours du premier essai sur route ;
- mesurer la variation de temps desdits paramètres physiques de l'automobile (25) ou de parties de ceux-ci au cours d'un deuxième essai de l'automobile (25), qui est exécuté sur les transporteurs à rouleaux de simulation ;
- enregistrer des premiers signaux (68) correspondant à ladite variation dudit deuxième essai sur les transporteurs à rouleaux, dans lequel lesdits premiers signaux (68) sont envoyés à l'entrée des moyens d'entraînement des transporteurs à rouleaux (69) ;
- comparer lesdits deuxièmes signaux (61) et lesdits premiers signaux (68) à l'entrée du système de commande de rétroaction adaptative automatique (60), lesdits premiers signaux (68) étant prélevés à la sortie dudit système (60) et étant renvoyés à l'entrée dudit système de commande (60) par le biais d'au moins un anneau de réaction fermé (74) ;
- produire des signaux d'erreurs (63), définis comment étant égaux à la somme algébrique desdits premiers signaux (68) et desdits deuxièmes signaux (61), ladite somme algébrique représentant la différence existant entre les signaux (68, 61) correspondant auxdits paramètres mesurés au cours dudit deuxième essai de l'automobile (25) sur les transporteurs à rouleaux et les mêmes paramètres enregistrés au cours dudit premier essai sur route, ledit système de commande de rétroaction adaptative (60) comportant en outre lesdits moyens d'entraînement des transporteurs à rouleaux (69), qui déterminent les changements de vitesse et de couple desdits transporteurs à rouleaux (10A, 10B) sur la base desdits signaux d'erreurs (63) afin de compenser les erreurs de changements de vitesse et de couple desdits transporteurs à rouleaux (10A, 10B) ;
- corriger lesdits paramètres mesurés au cours dudit deuxième essai de l'automobile (25) sur les transporteurs à rouleaux, de façon à remettre à zéro lesdits signaux d'erreurs (63).

4. Procédé selon la revendication 3, **caractérisé en ce que** lesdits signaux d'erreurs (63) comprennent un signal perturbateur (70) qui est présent à l'entrée desdits moyens d'entraînement des transporteurs à rouleaux (69), ledit signal perturbateur (70) étant échantillonné dans un dispositif sélecteur d'échantillonnage (72) et étant renvoyé à l'entrée dudit système de commande (60), par le biais dudit anneau de réaction (74), au moyen d'un dispositif de connexion (75) conçu pour reconstituer le signal perturbateur échantillonné.
